# EUROPÄISCHE PATENTSCHRIFT

(11) **EP 4 392 232 B1**
(45) Veröffentlichungstag und Bekanntmachung des Hinweises auf die Patenterteilung: **11.03.2026**
(21) Anmeldenummer: 23753873.1
(22) Anmeldetag: 04.08.2023
(51) Int. Cl.: B29C 64/112, B22F 10/47, B29C 64/118, B29C 64/40, B33Y 10/00

(54) **STÜTZGEOMETRIE**
SUPPORT GEOMETRY
GÉOMÉTRIE DE SUPPORT

(30) Priorität: 05.08.2022 DE 102022119792
(43) Veröffentlichungstag der Anmeldung: 03.07.2024
(73) Patentinhaber: Arburg GmbH + Co KG, 72290 Loßburg (DE)
(72) Erfinder: KNÖCHEL, Johannes, 71126 Gäufelden (DE)
(74) Vertreter: RPK Patenanwälte Reinhardt und Kaufmann Partnerschaft mbB (Pforzheim)
(86) Internationale Anmeldenummer: PCT/EP2023/071657
(87) Internationale Veröffentlichungsnummer: WO 2024/028478

(56) Entgegenhaltungen:
- US-A1- 2021 221 045

## Beschreibung

Die vorliegende Erfindung betrifft ein dreidimensionales Objekt mit einer Stützgeometrie, das aus plastifizierbarer und/oder verfestigbarer Masse mit wenigstens einer flächigen Deckstruktur über wenigstens einem Hohlraum herstellbar ist, mit den Merkmalen gemäß Anspruch 1.

Der Begriff "plastifizierbare Masse" ist dabei weit zu verstehen und umfasst insbesondere, aber nicht nur, neben Kunststoffen oder auch Silikon oder anderen thermoplastischen und/oder elastomeren Werkstoffen z.B. keramische, metallische und/oder pulverige Massen ebenso wie Papier, Cellulose, Stärke, Kork, usw. sowie auch Mischmaterialen zwischen derartigen plastifizierbaren Materialien. Grundsätzlich kann es sich dabei auch um bereits zuvor plastifizierte Materialien oder auch plastische Massen handeln, die nach dem Ausbringen selbsttätig oder unter Einsatz von Hilfsmitteln aushärten. Ebenso können Recyclate verwendet werden.

Wenn im Rahmen der Anmeldung von "Tropfen" die Rede ist, so handelt es sich in der Regel um Tropfen aus einem diskontinuierlichen Masseaustrag (aufgrund verschließbarer Düse / Taktung), während der Begriff "Strang" oder "Stränge" verwendet wird, wenn es sich um einen kontinuierlichen Masseaustrag (offene Düse) handelt. Beides ist miteinander kombinierbar.

In der extrusionsbasierten additiven Fertigung ist es unter bestimmten Voraussetzungen möglich, einen gewissen Abstand zwischen zwei Punkten ohne jegliche Unterstützung mit ausgetragenem Material zu überbrücken. Dies wird unter Fachleuten auch als "Bridging" bezeichnet. Das bedeutet, dass der abzulegende Materialstrang bzw. das ausgetragene Materialvolumen über eine gewisse Strecke x ohne Unterstützung in der Luft abgelegt wird. Ist die Strecke x zu groß, kann es zu einem Durchhängen des extrudierten Materialstranges kommen.

Ausgenutzt wird die Möglichkeit des Überbrückens, um unterstützende Bauteilübergänge ohne oder nur mit minimalem Einsatz von unterstützenden Stützstrukturen aufzubauen, da somit sowohl Material als auch Bauzeit eingespart werden können. Ebenfalls wird diese Möglichkeit ausgenutzt, wenn Bauteilvolumen nicht als Vollvolumen, sondern mit einer Gitternetzstruktur z.B. als Dreiecke oder Waben etc. aufgebaut werden. Alle Strukturen werden meist nur global im Objekt angewendet und haben die Gemeinsamkeit, dass diese zu überbrückende Punkte oder Linien darstellen.

Teilweise erfolgt direkt der Übergang von einer Bauteilschicht, die mit einer Gitterstruktur aufgebaut wurde, auf eine vollgefüllte Schicht. Auch werden dazwischen z.T. Bauteilschichten mit einer minimalen Verengung der Gitterbreite erzeugt, um ein Überhängen der obersten Bauteilschicht zu verhindern bzw. zu reduzieren. Ebenfalls werden z.T. mehrere oberste Schichten aufeinandergelegt, sodass hängende Schichten - falls vorhanden - eingeebnet werden.

Gitterstrukturen werden ebenfalls bei vollvolumigen Stützgeometrien verwendet. Stützgeometrien dienen dazu, Bauteilüberhänge abzustützen. So können Bauteile mit beliebiger Geometrie Schicht für Schicht aufgebaut werden und sehr komplexe Formen aufweisen. Die Stützgeometrie sollte dem Bauteil während des Prozesses genügend Stabilität gewährleisten. Mittels der Gitter- oder Linienfüllung werden nicht nur Material, sondern auch Bauzeiten eingespart bei gleichbleibender Funktionalität. Ebenfalls werden sogenannte Baumstrukturen als Stützgeometrie generiert, sodass an der abzustützenden Fläche genügend zu überbrückende Punkte bzw. Linien vorliegen.

Liegen vollvolumige Stützvolumenkörper vor, wird auch maßgeblich die Nachbearbeitungszeit beeinflusst. Da oftmals wasserlösliche Materialien als Stützmaterial verwendet werden, ist die Lösezeit im Warm-Wasserbad aufgrund der hohen Dichte relativ hoch und für manche Baumaterialien ist die oftmals stundenlange Lagerung in sehr feuchter Umgebung nicht vorteilhaft. Durch die langen Prozesszeiten und den hohen Bedarf an löslichem Material hat die Stützgeometrie somit einen direkten Einfluss auf die Gesamtkosten des Bauteils.

Wenn mehrere Austragsdüsen vorhanden sind, können Stützstrukturen aus einem anderen Baumaterial als das herzustellende Objekt gefertigt werden. Während des Fertigungsprozesses ist die Verbindung zwischen Stützmaterial und Bauteilmaterial stabil genug, um ein Lösen zu verhindern. Nach dem Fertigungsprozesse lässt sich diese Verbindung aber sauber und zerstörungsfrei voneinander trennen.

Alle verwendeten Stützgeometrien, die keine vollvolumige Füllung aufweisen, haben die Gemeinsamkeit, dass keine geschlossenen planflächigen Schichten zum direkten Abstützen einer vollgefüllten Bauteilschicht vorliegen. Es müssen stets Abstände überbrückt werden, auch wenn Übergangsschichten vorliegen, die eine geringerer Gitterbreite aufweisen. Dies ist besonders dann nachteilig, wenn keine Überbrückung möglich ist.

Ein Beispiel für solch eine Lösung ist z. B. in der WO 2019/0222230 A1 zu finden. Darin beschrieben ist eine selbsttragende Gitterstruktur mit hohen Festigkeits-Gewichts-Verhältnissen. Es wird eine additiv hergestellte Struktur bereitgestellt, die eine selbsttragende Gitterstruktur umfasst, die durch eine Vielzahl von Einheitszellen gebildet wird. Darüber hinaus enthält jede Einheitszelle einen symmetrischen Rahmen mit Hohlräumen oder Ausschnitten, die sich durch jede der Seitenflächen des symmetrischen Rahmens erstrecken, um darin einen negativen Raum zu definieren. Der Negativraum reduziert die Dichte und das Gesamtgewicht der selbsttragenden Gitterstruktur erheblich.

Aus der US 2021/0221045 A1 ist eine Stützgeometrie zur Herstellung eines dreidimensionalen Objekts aus plastifizierbarer und/oder verfestigbarer Masse bekannt, das mittels Austrag von Tropfen herstellbar ist. Vorgesehen sind wenigstens eine flächige Deckstruktur über einem Hohlraum und wenigstens eine Trägerstruktur, die sich von einem Objektträger durch den Hohlraum bis zur flächigen Deckstruktur erstreckt, wobei eine oder mehrere übereinander aufgetragene Trägerebenen der Trägerstruktur jeweils eine Anzahl von p ≥ 1 Tropfen der Masse mit identischen Durchmessern enthalten. Die Trägerstruktur ist zur flächigen Deckstruktur hin durch Auftrag wenigstens einer Verbreiterungsebene auf die jeweils letzte Trägerebene verbreitert. Die Anzahl der Verbreiterungsebenen, die sich zur Deckstruktur und Bodenstruktur hin erstrecken, kann unterschiedlich sein, wobei sich bei mehreren übereinander angeordneten Verbreiterungsebenen die Verbreiterungsebenen zur flächigen Deckstruktur hin verbreitern.

Die US 2020/0108442 A1 beschreibt eine Vorrichtung zum Herstellen eines dreidimensionalen Artikels durch additive Fertigung, umfassend einen Prozessor und eine Informationsspeichervorrichtung, die Softwareanweisungen speichert. Als Reaktion auf die Ausführung durch den Prozessor veranlassen die Softwarebefehle die Vorrichtung zum: Empfangen von Anfangsdaten, die den dreidimensionalen Artikel mit einer Außenfläche definieren, zum Definieren einer Schale mit der Außenfläche des dreidimensionalen Artikels und einer gegenüberliegenden Innenfläche, die einen inneren Hohlraum definiert, zum Definieren einer Übergangszone zwischen der Innenfläche der Schale und eines Grenzbereichs, der sich innerhalb des inneren Hohlraums befindet und im Allgemeinen der Innenfläche der Schale folgt, zum Definieren eines Gitters aus angeordneten Einheitszellen, die das Innere des Grenzbereichs füllt, wobei das Gitter durch verbundene Gittersegmente definiert wird, und zum Definieren von Übergangssegmenten, die das Gitter mit der Innenfläche der Hülle koppeln.

Aus der US 2021/0370606 A1 sind Systeme und Verfahren zum Erzeugen abgestufter Gitterstrukturen bekannt, die als Füllung für additiv hergestellte Artikel verwendet werden können. Mittels maßgeschneiderten Schneidens und feldbasierten Glättens werden modifizierte Polygon-Packungsalgorithmen für z. B Kreise angepasst, die die Größe der Kreise basierend auf physikalischen Felddaten anpassen, um den Füllerzeugungsprozess an ein Feld anzupassen, das von dem Artikel erwartet wird. Die so erzeugte molekulardynamische Gitterfüllung basiert auf dem Kraftausgleich einer Knotenverteilung anstelle einer Kreispackung. Die Felddaten können dabei verwendet werden, um den Abstand der Knotenverteilung gemäß einem Kräftegleichgewichtsmodell anzupassen, das das oben genannte Feld berücksichtigt. Die resultierenden ungleichmäßigen Wabenstrukturen aus maßgeschneidertem Schneiden, feldbasierter Glättung und Kraftausgleich gehen robust und effizient die Verbindungsprobleme mit traditionellen ungleichmäßigen Gitterstrukturen an.

In der WO 2020/0091858 A1 ist die Herstellung von dreidimensionalen Objekten mit Gitterträgern beschrieben, die chemisch entfernt werden können. Die Herstellung umfasst das Bilden des Objekts in einem Pulverbettabscheidungsbereich einer additiven Fertigungsvorrichtung aus einem Pulver. Ein offenzelliges Gitter, das einen ungebundenen Bereich und einen gebundenen Bereich umfasst, wird in Verbindung mit mindestens einem Teil des Objekts gebildet. Der gebundene Bereich des offenzelligen Gitters ist angepasst, um das Teil in dem Pulverbett-Abscheidungsbereich zu begrenzen. Der ungebundene Bereich ist angepasst, um einen Hohlraum zu bilden, der ein Ätzmittel aufnehmen kann.

Die DE 696 25 220 T2 offenbart ein Verfahren bzw. eine Vorrichtung zum schichtweisen Aufbauen eines Objektes, wobei die Schichten Tropfen aufweisen. In dem Verfahren werden bogenähnliche Unterstützungen zwischen einer aufwärtszeigenden Oberfläche und einer abwärtszeigenden Oberfläche dargestellt. Über die genaue Struktur der zur Bildung der bogenähnlichen Unterstützungen schichtweise abgelegten Tropfen ist nichts ausgesagt, insbesondere nicht zur konkreten Anordnung der Tropfen, deren Größen und deren Abstände in den Schichten der bogenähnlichen Unterstützungen. Die Tropfendichte innerhalb einer abwärtszeigen Oberfläche sowie einer aufwärtszeigenden Oberfläche ist höher als in einer Unterstützung, wobei die Tropfendichte in den Grenzregionen zwischen den Unterstützungen und der abwärtszeigen Oberfläche bzw. aufwärtszeigenden Oberfläche, also jeweils am Rande der Unterstützung und der abwärtszeigen Oberfläche bzw. aufwärtszeigenden Oberfläche höher ist.

Die DE 195 07 881 A1 offenbart ein Verfahren zum Stützen eines Objekts, gefertigt durch Stereolithographie oder ein anderes Prototypen-Fertigungsverfahren, mit zumindest einer Stützkonstruktion, die leichter ist als eine Stützkonstruktion, die aus vollen, aufstehenden Wänden, eventuell mit Einkerbungen oben und/oder unten, besteht. Die Stützkonstruktionen weisen darin angeordnete kugelartige Elementen auf, die sich nach oben hin verbreitern, und jeweils zwischen den kugelartigen Elementen angeordneten Zwischenwänden.

Der Erfindung liegt ausgehend von diesem Stand der Technik die Aufgabe zugrunde, eine leichte Stützgeometrie anzugeben, die ein Hängen einer flächigen Deckstruktur eines dreidimensionalen Objekts aus plastifizierbarer und/oder verfestigbarer Masse während dessen Herstellung verhindert und eine insgesamt geringe Bauzeit ermöglicht.

Dies wird mit einem dreidimensionalen Gegenstand mit einer Stützgeometrie gemäß den Merkmalen des Patentanspruchs 1 gelöst. Der Vorteil der Erfindung liegt in der Schaffung einer leichten Stützgeometrie, die im Vergleich zu vollvolumigen Stützvolumenkörper mit weniger Material auskommt, aber dennoch ein Hängen der flächigen Deckstruktur des dreidimensionalen Objekts aus plastifizierbarer und/oder verfestigbarer Masse während dessen Herstellung verhindert und eine insgesamt geringe Bauzeit ermöglicht.

Die Durchmesser der Tropfen und/oder Stränge können vorzugsweise identisch sein, was zu einer gleichmäßigen flächigen Ausgestaltung der Ebenen beiträgt, eine andere Ausgestaltung ist jedoch möglich.

Vorteilhafte Weiterbildungen sind Gegenstand der abhängigen Patentansprüche.

Vorzugsweise sind die Tropfen und/oder Stränge der Trägerebene und/oder Verbreiterungsebene ausschließlich eindimensional in einer Reihe nebeneinander angeordnet, so dass vorteilhaft eine beliebige flächige Struktur dieser Ebenen gebildet werden kann, indem dann wiederum weitere Trägerstrukturen mit ihren Trägerebenen und/oder der Verbreiterungsebenen neben diesen eindimensionalen Reihen angeordnet werden.

In einer bevorzugten Ausführungsform sind zur Verbesserung der Stützwirkung mehrere Trägerstrukturen mit identischen oder unterschiedlichen Anzahlen p, q von Tropfen und/oder Strängen der Trägerebenen und Verbreiterungsebenen zweidimensional nebeneinander zu einem Cluster angeordnet, wobei ein seitlicher Abstand zwischen den direkt an das dreidimensionale Objekt angrenzenden Verbreiterungsebenen der Trägerstrukturen kleiner als der Durchmesser eines Tropfens und/oder Stranges zur Herstellung des dreidimensionalen Objekts ist. Dadurch wird vorteilhaft eine flächige Abstützung gewährleistet, die damit die baulichen Voraussetzungen dafür schafft, ein unerwünschtes Hängen zu verhindern.

Bevorzugterweise sind zur weiteren Verbesserung der Stützwirkung mehrere Cluster der Trägerstrukturen nebeneinander angeordnet, wobei ein seitlicher Abstand zwischen den direkt an das dreidimensionale Objekt angrenzenden Verbreiterungsebenen der Cluster kleiner als der Durchmesser eines Tropfens und/oder Stranges zur Herstellung des dreidimensionalen Objekts ist. Dies schafft vorteilhaft eine Abstützung gegen unerwünschtes Hängen.

Vorzugsweise grenzen benachbarte Tropfen und/oder Stränge der Verbreiterungsebenen, die direkt an das dreidimensionale Objekt angrenzen, direkt aneinander an. Dies hat den Vorteil, dass die angrenzende (Ober-)Fläche des dreidimensionalen Objekts vollflächig gestützt ist, wodurch die größtmögliche Stützwirkung erreicht ist.

In einer bevorzugten Ausführungsform, in der vorteilhaft die Selbststützung der Stützgeometrie verbessert ist, bilden Ränder der übereinander angeordneten Verbreiterungsebenen mit Rändern der Trägerebenen einen Winkel, der bis zum Selbststützwinkel des Materials der Stützgeometrie reicht und/oder wenigstens einen Winkel von 45° aufweist. Der Selbststützwinkel des Materials ist der Winkel, bis zu dem ein Material ohne Stützstruktur überhängend aufgebracht werden kann.

In einer bevorzugten Ausführungsform, die vorteilhaft die Stützwirkung der Stützgeometrie verbessert, ist auf der breitesten Verbreiterungsebene wenigstens eine weitere zu dieser identische Verstärkungsebene angeordnet. Dadurch ist diese in der Regel an das dreidimensionale Objekt anschließende Ebene zusätzlich ausgesteift und damit weniger verformbar.

Um bei gleichzeitiger Materialeinsparung die Stützwirkung der Stützgeometrie vorteilhaft zu verbessern, sind nebeneinander angeordnete Trägerstrukturen und/oder Cluster von Trägerstrukturen gitterförmig, also miteinander verbunden, angeordnet.

Vorzugsweise korreliert die Anzahl der Verbreiterungsebenen benachbarter Trägerstrukturen oder Clustern von Trägerstrukturen mit dem Abstand zwischen den Trägerstrukturen oder Clustern von Trägerstrukturen.

Um vorzugsweise die Entfernung der Stützgeometrie nach Herstellung des dreidimensionalen Objekts zu verbessern, ist die Trägerstruktur aus einer anderen plastifizierbaren und/oder verfestigbaren Masse hergestellt als das dreidimensionale Objekt. Durch eine entsprechende Materialwahl kann vorteilhaft ein Herauslösen der Stützgeometrie zu Gunsten des Materials des dreidimensionalen Objekts beeinflusst werden.

In einer bevorzugten die Eigenschaften des herzustellenden dreidimensionalen Objekts vorteilhaft verbessernden Ausführungsform der Stützgeometrie ist die Trägerstruktur aus dem dreidimensionalen Objekt herauslösbar, vorzugsweise flüssigkeitslöslich, insbesondere wasserlöslich. Es kann sich hierbei insbesondere um reines Wasser oder auch um eine Lauge gelöst in Wasser handeln.

In einer bevorzugten die Herstellung des dreidimensionalen Objekts verbessernden Ausführungsform der Stützgeometrie unterscheidet sich wenigstens eine Höhenebene, bis zu der/von der sich eine der Trägerstrukturen erstreckt von wenigstens einer anderen Höhenebene einer der anderen Trägerstrukturen, bis zu der/von der sich diese erstreckt.

Vorteilhaft können damit im dreidimensionalen Objekt verschiedene Ebenen und damit späterer Oberflächen des dreidimensionalen Objekts vorgesehen sein, bis zu denen sich die jeweilige Stützgeometrie erstreckt. Diese Ebenen können eine beliebige Form aufweisen.

Die Erfindung wird nun anhand eines Ausführungsbeispiels näher erläutert. Es zeigen:
- Fig. 1: eine Stützgeometrie in Seitenansicht bzw. im Schnitt,
- Fig. 2a: eine Stützgeometrie aus ausschließlich nebeneinander angeordneten Tropfen und Strängen in Draufsicht,
- Fig. 2b: eine Stützgeometrie mit quadratisch angeordneten Tropfen in Draufsicht,
- Fig. 2c: eine Stützgeometrie mit einer ungeraden Anzahl nebeneinander angeordneten Tropfen in Draufsicht,
- Fig. 3: ein dreidimensionales Objekt mit einer Stützgeometrie bestehend aus zwei Trägerstrukturen in Seitenansicht,
- Fig. 4, 5: ein dreidimensionales Objekt mit einer Stützgeometrie bestehend aus drei Trägerstrukturen in Seitenansicht in zwei Ausführungsformen,
- Fig. 6: ein dreidimensionales Objekt mit einer Stützgeometrie in Seitenansicht.

### Ausführliche Beschreibung bevorzugter Ausführungsbeispiele

Die Erfindung wird jetzt beispielhaft unter Bezug auf die beigefügten Zeichnungen näher erläutert. Allerdings handelt es sich bei den Ausführungsbeispielen nur um Beispiele, die nicht das erfinderische Konzept auf eine bestimmte Anordnung beschränken sollen. Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

Die Figuren zeigen Stützgeometrien in verschiedenen Ausführungsformen, die dazu eingerichtet sind, bei der additiven Herstellung von dreidimensionalen Objekten 5 (Ober-) Flächen des dreidimensionalen Objekts zumindest im Bauzustand abzustützen, die über einem Freiraum oder Hohlraum 9 angeordnet insbesondere nicht mehr in der Lage sind, sich mit dem Selbststützwinkel der verarbeiteten Masse selbst zu tragen.

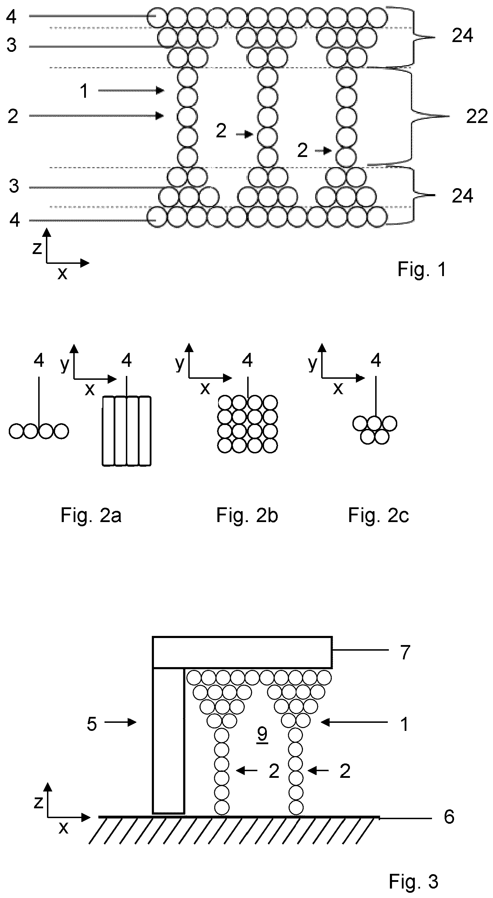

Fig. 1 zeigt eine erfindungsgemäße Stützgeometrie 1 in Seitenansicht (x-z-Ansicht eines dreidimensionalen x-y-z-Koordinatensystems) mit drei Trägerstrukturen 2. Die Trägerstrukturen 2 weisen wenigstens eine Trägerebene 22 und wenigstens eine Verbreiterungsebene 24 auf. Die Verbreitungsebene 24 weist weiterhin eine Übergangsschicht 3 und eine vorzugsweise vollgefüllte Deckschicht 4 auf. Es kann auch Trägerstrukturen 2 geben, bei denen eine Verbreiterungsebene 24 keine vollgefüllte Deckschicht 4 aufweist, um Gewicht einzusparen. Die Trägerebenen 22 und Verbreiterungsebenen 24 bestehen dabei aus Tropfen und/oder Strängen bzw. Massevolumina einer plastifizierbaren und/oder verfestigbaren Masse.

Die Trägerebene 22 als auch die Verbreiterungsebene 24 können in der x-y-Ansicht des x-y-z-Koordinatensystems unterschiedlich ausgestaltet sein, wie dies die Fig. 2a bis 2c zeigen. Fig. 2a zeigt eine Draufsicht einer Stützgeometrie 1, bei der eine Verbreiterungsebene 24 ausschließlich aus einer nebeneinander in einer Reihe angeordneten Anzahl von Tropfen und/oder Strängen besteht. Fig. 2b zeigt eine Draufsicht einer Stützgeometrie 1, bei der eine Verbreiterungsebene 24 aus einer quadratischen angeordneten Anzahl von Tropfen besteht. Diese Stützgeometrie 1 kann durch die Nebeneinanderanordnung mehrerer identischer Trägerstrukturen 2 ein Cluster bilden. Dabei sind die Anzahlen p, q der Tropfen und/oder auch Stränge in den Trägerebenen 22 und Verbreiterungsebenen 24 in jeder Reihe in der Regel identisch. Fig. 2c zeigt eine Draufsicht einer Stützgeometrie 1, bei der eine Verbreiterungsebene 24 aus nebeneinander angeordneten unterschiedlichen Trägerstrukturen 2 besteht, die ebenfalls einen Cluster bilden. Dabei weisen die Reihen der Trägerstrukturen 2 unterschiedliche Anzahlen p, q von Tropfen auf.

Die Fig. 3 bis 6 zeigen eine Stützgeometrie 1 zur Herstellung eines dreidimensionalen Objekts 5 aus plastifizierbarer und/oder verfestigbarer Masse, das mittels Austrag von Tropfen und/oder Strängen mit vorzugsweise identischen Durchmessern herstellbar ist. Grundsätzlich können auch verschiedene Durchmesser verwendet werden, wenngleich identische Durchmesser vorteilhaft eine ebene Fläche bilden. Die Stützgeometrie 1 weist wenigstens eine flächige Deckstruktur 7 über wenigstens einem Hohlraum 9 auf. Sie umfasst wenigstens eine Trägerstruktur 2, die sich von einem Objektträger 6 oder einer flächigen Bodenstruktur 8 des dreidimensionalen Objekts 5 durch den wenigstens einen Hohlraum 9 bis zur flächigen Deckstruktur 7 erstreckt. Dabei ist die Stützgeometrie 1 aus der gleichen oder einer anderen tropfenförmigen und/oder strangförmigen plastifizierbaren und/oder verfestigbaren Masse wie das dreidimensionale Objekt 5 hergestellt.

Eine oder mehrere übereinander aufgetragene Trägerebenen 22 der Trägerstruktur 2 enthalten jeweils eine Anzahl von p ≥ 1 Tropfen und/oder Stränge der plastifizierbaren und/oder verfestigbaren Masse mit vorzugsweise identischen Durchmessern, wobei bei p > 1 die Tropfen und/oder Stränge vorzugsweise ausschließlich eindimensional in einer Reihe nebeneinander angeordnet sein können. Bei solch einer Ausgestaltung lassen sich durch beliebige Anordnung von Trägerebenen mehrdimensionale Strukturen beliebig gestalten. Die nebeneinander angeordneten Tropfen und/oder Stränge der Trägerebenen 22 sind mit einem Abstand zueinander angeordnet, der kleiner als der Durchmesser des Tropfens und/oder Stranges ist.

Um eine erfindungsgemäße Stützfunktion zu erreichen, wird die wenigstens eine Trägerstruktur 2 zur flächigen Deckstruktur 7 und/oder zur flächigen Bodenstruktur 8 hin durch Auftrag wenigstens einer Verbreiterungsebene 24 auf die jeweils letzte Trägerebene 22 verbreitert. Dabei kann die Anzahl der Verbreiterungsebenen 24 die sich zur Deckstruktur 7 und Bodenstruktur 8 hin erstrecken unterschiedlich sein. Bei mehreren übereinander angeordneten Verbreiterungsebenen 24 verbreitern sich die Verbreiterungsebenen 24 jeweils zur flächigen Deckstruktur 7 und/oder Bodenstruktur 8 hin. Jede Verbreiterungsebene 24 enthält dabei eine Anzahl von q= n + p Tropfen und/oder Strängen der plastifizierbaren und/oder verfestigbaren Masse mit identischen Durchmessern entsprechend den Trägerebenen 22, wobei die Tropfen und/oder Stränge auch bei den Verbreiterungsebenen 24 vorzugsweise eindimensional in einer Reihe nebeneinander angeordnet sein können und wobei n die Ordnungszahl der jeweiligen Verbreiterungsebene 24 ist. Zwischen verschiedenen Verbreiterungsebenen können auch Ebenen angeordnet sein, die sich nicht weiter verbreitern, d.h. es können auch eine oder mehrere Ebenen mit gleicher Größe übereinander angeordnet sein, bevor die nächste Verbreiterungsebene die Fläche weiter verbreitert.

Eine Verbreitung kann sowohl nach oben (zur Deckstruktur) als auch nach unten (zur Bodenstruktur) oder in beide Richtungen erfolgen. Die "jeweils letzte Trägerebene" kann dabei die letzte nach oben und/oder unten sein, auf die jeweils eine oder mehrere Verbreiterungsebene aufgebracht werden. Damit kann die Ordnungszahl "n" sowohl nach oben als auch nach unten zunehmen. Die jeweils erste Verbreiterungsebene auf der Trägerebene weist somit die Ordnungszahl 1 auf, die zweite Verbreiterungsebene die Ordnungszahl 2, usw.

Beispielhaft enthält die erste Verbreiterungsebene 24 also entsprechend q = 1 + p Tropfen, während die zweite bzw. nächste Ebene q = 2 + p Tropfen enthält. Bei allen weiteren Verbreiterungsebenen 24 verhält sich dies analog.

Die nebeneinander angeordneten Tropfen und/oder Stränge der Verbreiterungsebenen 24 sind mit einem Abstand zueinander angeordnet, der kleiner als der Durchmesser des Tropfens oder Stranges ist, wobei die Tropfen und/oder Stränge der Verbreiterungsebene 24, die direkt an das dreidimensionale Objekt 5 angrenzen, mit einem Abstand zueinander angeordnet sind, der kleiner als der Durchmesser eines Tropfens oder Stranges zur Herstellung des dreidimensionalen Objekts 5 ist. Ein derartiger Abstand kann auch Null sein. Dadurch kann an diesen Stellen ein Hängen der angrenzenden Fläche verhindert werden.

Bei großflächigeren oder schweren bzw. schwer belasteten Deckstrukturen 7 ist es vorteilhaft, wenn wenigstens zwei nebeneinander angeordnete Trägerstrukturen 2 Bestandteile der Stützgeometrie 1 sind, wie in z. B. in den Fig. 3 bis 6.

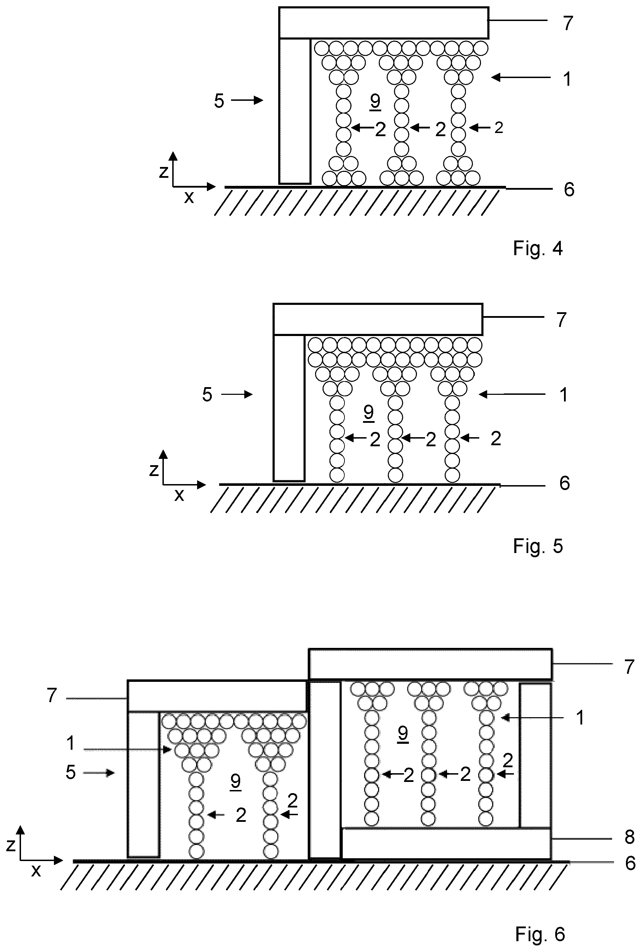

Fig. 4 zeigt neben der Verbreiterung der Trägerstruktur 2 zur Deckstruktur 7 hin außerdem noch eine Verbreitung der Trägerstruktur 2 zur Bodenstruktur 8 hin. Dies ist insbesondere vorteilhaft bei leichteren Deckstrukturen 7 oder bei geringeren auf diesen wiederum lastenden Gewichten. Dadurch kann die Trägerstruktur 2 leichter ausgeführt werden, um dadurch Material, Bauzeit und Zeit beim eventuellen Herauslösen der Stützgeometrie zu sparen.

In der x-y-Ebene des dreidimensionalen Koordinatensystems kann die Stützgeometrie 1 durch eine einfache eindimensionale Stützstruktur 2 gebildet sein, wie in Fig. 2a abgebildet. Bei einer komplexeren zweidimensionalen Stützstruktur 2 der Stützgeometrie 1 in der x-y-Ebene des dreidimensionalen Koordinatensystems, wie in Fig. 2b und 2c abgebildet, sind mehrere Trägerstrukturen 2 mit identischen oder unterschiedlichen Anzahlen p, q von Tropfen und/oder Strängen der Trägerebenen 22 und Verbreiterungsebenen 24 zweidimensional nebeneinander zu einem Cluster angeordnet. Vorteilhaft ist ein seitlicher Abstand, der auch bedarfsweis e Null sein kann, zwischen den direkt an das dreidimensionale Objekt 5 angrenzenden Verbreiterungsebenen 24 der Trägerstrukturen 2 auch hier kleiner als der Durchmesser eines Tropfens oder Stranges zur Herstellung des dreidimensionalen Objekts 5. Dies verbessert die Stützwirkung der Stützgeometrie 1.

Es können aber auch mehrere Cluster der Trägerstrukturen 2 nebeneinander angeordnet sein. In diesem Fall ist vorteilhaft ein seitlicher Abstand zwischen den direkt an das dreidimensionale Objekt 5 angrenzenden Verbreiterungsebenen 24 der Cluster kleiner als der Durchmesser eines Tropfens oder Stranges zur Herstellung des dreidimensionalen Objekts 5 und im kleinsten Fall Null. Dadurch wird die Stützwirkung der Stützgeometrie 1 nochmals verbessert.

Optimal für die Stützwirkung der Stützgeometrie ist es, wenn benachbarte Tropfen und/oder Stränge der Verbreiterungsebene 24, die direkt an das dreidimensionale Objekt 5 angrenzen, insbesondere der Deckstruktur 7, direkt benachbart sind, wie dies z. B. in Fig. 3 bis 5 gezeigt ist bei der Abstützung der Deckstruktur 7. Dies ist insbesondere vorteilhaft bei schwereren Deckstrukturen 7 oder bei größeren auf diesen wiederum lastenden Gewichten. Diese Abstützung mittels einer geschlossenen Fläche führt auch zur besten Oberflächenqualität der Anschlussfläche des dreidimensionalen Objekts 5.

Besonders vorteilhaft für die Selbststützung der Stützgeometrie 1 ist es, wenn die Ränder der n übereinander angeordneten Verbreiterungsebenen 24 mit Rändern der Trägerebenen 22 einen Winkel bilden, der bis zum Selbststützwinkel des Materials der Stützgeometrie reicht und/oder wenigstens einen Winkel von 45° aufweist. Der Selbststützwinkel des Materials ist der Winkel, bis zu dem ein Material ohne Stützstruktur überhängend aufgebracht werden kann.

Wenn die Deckstrukturen 7 besonders schwer oder die auf diesen aufliegenden Lasten besonders groß sind, kann in vorteilhafter Weise bedarfsweise auf der breitesten Verbreiterungsebene 24 wenigstens eine weitere, vorzugsweise zu dieser identische Verstärkungsebene angeordnet sein, wie dies in Fig. 5 zu sehen ist.

Wenn die Belastung der Stützgeometrie 1 durch Deckstrukturen 7 oder auf diesen lastenden Gewichten geringer ist oder auch der Anspruch an die Oberflächenqualität geringer ist, dann ist es für das Gewicht und/oder das spätere Herauslösen der Stützgeometrie 1 besonders vorteilhaft, wenn benachbarte Tropfen und/oder Stränge von Verbreiterungsebenen 24 oder nebeneinander angeordneter Verbreiterungsebenen 24 der Trägerstrukturen 2, die direkt an das dreidimensionale Objekt 5 angrenzen, insbesondere an die Deckstruktur 7, mit einem Abstand zueinander angeordnet sind, der kleiner als ein Durchmesser eines Tropfens oder eines Stranges zur Herstellung des dreidimensionalen Objekts 5 ist, insbesondere der Deckstruktur 7. Fig. 6 zeigt diesen Sachverhalt bei der Abstützung der Deckstruktur 7 auf der rechten Seite der Zeichnung. Dabei wird jeweils auf eine vollgefüllte Deckschicht 4 der Verbreiterungsebene 24 verzichtet, wie in Fig. 1 gezeigt und in Fig. 6 nicht explizit bezeichnet. Gleichwohl wird auch hier ein Hängen verhindert.

Ab einem bestimmten Grad der Belastung, entweder durch die Deckstruktur 7 selbst oder durch die von dieser getragenen Last ist es besonders vorteilhaft, wenn mehrere Trägerstrukturen 2 und/oder Cluster von Trägerstrukturen 2 gitterförmig, also miteinander verbunden, angeordnet sind.

Für die Bemessung als auch für die Bauzeit der Stützgeometrie 1 ist es vorteilhaft, wenn ein Abstand von zwei Trägerstrukturen 2 und/oder Clustern von Trägerstrukturen 2 zueinander einstellbar ist. Dies ermöglicht die Herstellung besonders leichter oder besonders tragfähiger Stützgeometrien 1. Es hat sich gezeigt, dass es dann besonders vorteilhaft ist, wenn die Anzahl der Verbreiterungsebenen 24 benachbarter Trägerstrukturen 2 oder Clustern von Trägerstrukturen 2 mit dem Abstand zwischen den Trägerstrukturen 2 oder Clustern von Trägerstrukturen 2 korreliert. D. h. bei größerem Abstand zwischen den Trägerstrukturen 2 oder Clustern von Trägerstrukturen 2 ist es sinnvoll, mehr Verbreiterungsebenen 24 und damit auch eine breitere bzw. großflächigere letzte Verbreiterungsebene 24 vorzusehen, als bei einem geringeren Abstand.

Für die Tragfähigkeit bzw. die Herstellung und ggf. Entfernung der Stützgeometrie 1 ist es außerdem vorteilhaft, wenn die Trägerstruktur 2 aus einer anderen plastifizierbaren und/oder verfestigbaren Masse hergestellt ist als das dreidimensionale Objekt 5. Es können so beispielsweise dichtere Massen oder Massen mit geringerer Dichte für die Herstellung der Stützgeometrie 1 verwendet werden oder leicht lösbare Massen, um höhere Traglasten der Stützgeometrie 1 oder eine einfachere Zerstörung/Herauslösung der Stützgeometrie 1 zu ermöglichen, wenn diese nach der Herstellung des dreidimensionalen Objekts 5 nicht mehr benötigt wird. Es ist auch denkbar, dass nur einige der Trägerstrukturen 2 der Stützgeometrie 1 aus einer anderen plastifizierbaren und/oder verfestigbaren Masse hergestellt sind als das dreidimensionale Objekt 5.

Es ist von besonderem Vorteil für die Eigenschaften des herzustellenden dreidimensionalen Objekts, wenn die Trägerstruktur 2 aus dem dreidimensionalen Objekt 5 herauslösbar ist. Dies kann insbesondere unabhängig davon sein, welche Dichte das Material bzw. die Masse aufweist, aus der die Stützgeometrie 1 hergestellt ist. In der Praxis hat sich als besonders praktikabel erwiesen, wenn die Trägerstruktur 2 flüssigkeitslöslich, insbesondere wasserlöslich oder laugenlöslich aus dem dreidimensionalen Objekt 5 herauslösbar ist. Dabei können z. B. auch nur einige der Trägerstrukturen 2 der Stützgeometrie 1 herauslösbar sein, die nur für den Aufbau des dreidimensionalen Objekts 5 notwendig waren, jedoch für die spätere Belastung keine Rolle spielen, während andere Trägerstrukturen im Objekt verbleiben.

Bei komplexeren dreidimensionalen Objekten 5, insbesondere bei Objekten mit unterschiedlichen Decken- oder Bodenhöhen, ist es vorteilhaft, dass sich wenigstens eine Höhenebene, bis zu der/von der sich eine der Trägerstrukturen 2 erstreckt, von wenigstens einer anderen Höhenebene einer der anderen Trägerstrukturen 2 unterscheiden kann, bis zu der/von der sich diese erstreckt. Mit anderen Worten kann das dreidimensionale Objekt 5 verschiedene (Ober-)Flächen aufweisen, die auf unterschiedlicher Höhe bei der Herstellung abgestützt werden. Die Form dieser Ebenen oder Flächen ist dabei beliebig.

Fig. 6 zeigt dies. Im linken Bereich des dreidimensionalen Objekts 5 kommt dieses ohne eine Bodenstruktur 8 aus, wohingegen eine solche Bodenstruktur 8 im rechten Bereich des dreidimensionalen Objekts notwendig ist. Infolge dessen sind die Trägerstrukturen 2 in diesen Bereichen auf unterschiedlichen Höhenebenen in Bezug auf die jeweils letzten Verbreiterungsebenen 24 angeordnet.

### Bezugszeichenliste

- 1: Stützgeometrie
- 2: Trägerstruktur
- 22: Trägerebene
- 24: Verbreiterungsebene
- 3: Übergangsschicht
- 4: Vollgefüllte Deckschicht
- 5: Dreidimensionales Objekt
- 6: Objektträger
- 7: Flächige Deckstruktur
- 8: Flächige Bodenstruktur
- 9: Hohlraum
- 22: Trägerebene
- 24: Verbreiterungsebene

- p: Anzahl Tropfen oder Stränge der Trägerebene
- q: Anzahl Tropfen oder Stränge der Verbreiterungsebene
- n: Ordnungszahl der Verbreiterungsebene

## Patentansprüche

1. Dreidimensionales Objekt (5) mit einer Stützgeometrie (1), wobei das dreidimensionale Objekt (5) aus plastifizierbarer und/oder verfestigbarer Masse mittels Austrag von Tropfen und/oder Strängen mit vorzugsweise identischen Durchmessern herstellbar ist, mit wenigstens einer flächigen Deckstruktur (7) über wenigstens einem Hohlraum (9), umfassend wenigstens eine Trägerstruktur (2), die sich von einem Objektträger (6), eingerichtet zur Herstellung des dreidimensionalen Objekts (5), oder einer flächigen Bodenstruktur (8) des dreidimensionalen Objekts (5) durch den wenigstens einen Hohlraum (9) bis zur flächigen Deckstruktur (7) erstreckt, wobei die Stützgeometrie (1) aus der gleichen oder einer anderen tropfenförmigen und/oder strangförmigen plastifizierbaren und/oder verfestigbaren Masse wie das dreidimensionale Objekt (5) hergestellt ist,
wobei eine oder mehrere übereinander aufgetragene Trägerebenen (22) der Trägerstruktur (2) jeweils eine Anzahl von p ≥ 1 Tropfen und/oder Stränge der plastifizierbaren und/oder verfestigbaren Masse mit identischen Durchmessern enthalten, wobei bei p > 1 die Tropfen und/oder Stränge in einer Reihe nebeneinander angeordnet sind und wobei die nebeneinander angeordneten Tropfen und/oder Stränge der Trägerebenen (22) mit einem Abstand zueinander angeordnet sind, der kleiner als ein Durchmesser des Tropfens oder Stranges ist,
wobei die wenigstens eine Trägerstruktur (2) zur flächigen Deckstruktur (7) und/oder zur flächigen Bodenstruktur (8) hin durch Auftrag wenigstens einer Verbreiterungsebene (24) auf die jeweils letzte Trägerebene (22) verbreitert ist, wobei die Anzahl der Verbreiterungsebenen (24), die sich zur Deckstruktur (7) und Bodenstruktur (8) hin erstrecken, unterschiedlich sein kann,
wobei sich bei mehreren übereinander angeordneten Verbreiterungsebenen (24) die Verbreiterungsebenen (24) zur flächigen Deckstruktur (7) und/oder Bodenstruktur (8) hin verbreitern,
wobei die sich verbreiternden Verbreiterungsebenen (24) eine Anzahl von q= n + p Tropfen und/oder Strängen der plastifizierbaren und/oder verfestigbaren Masse entsprechend den Trägerebenen (22) enthält, wobei die Tropfen und/oder Stränge in einer Reihe nebeneinander angeordnet sind und wobei n die Ordnungszahl der jeweiligen Verbreiterungsebene (24) ist, und
wobei die nebeneinander angeordneten Tropfen und/oder Stränge der Verbreiterungsebenen (24) mit einem Abstand zueinander angeordnet sind, der kleiner als der Durchmesser des Tropfens oder Stranges ist,
wobei die Tropfen und/oder Stränge der Verbreiterungsebene (24), die direkt an das dreidimensionale Objekt (5) angrenzen, mit einem Abstand zueinander angeordnet sind, der kleiner als der Durchmesser eines Tropfens oder Stranges zur Herstellung des dreidimensionalen Objekts (5) ist.

2. Dreidimensionales Objekt (5) nach Anspruch 1, **dadurch gekennzeichnet, dass** die Tropfen und/oder Stränge der Trägerebene (22) und/oder der Verbreiterungsebene (24) ausschließlich eindimensional in einer Reihe nebeneinander angeordnet sind.

3. Dreidimensionales Objekt (5) nach Anspruch 1 oder 2, **dadurch gekennzeichnet, dass** mehrere Trägerstrukturen (2) mit identischen oder unterschiedlichen Anzahlen p, q von Tropfen und/oder Strängen der Trägerebenen (22) und/oder Verbreiterungsebenen (24) zweidimensional nebeneinander zu einem Cluster angeordnet sind, wobei ein seitlicher Abstand zwischen den direkt an das dreidimensionale Objekt (5) angrenzenden Verbreiterungsebenen (24) der Trägerstrukturen (2) kleiner als der Durchmesser eines Tropfens oder Stranges zur Herstellung des dreidimensionalen Objekts (5) ist.

4. Dreidimensionales Objekt (5) nach Anspruch 3, **dadurch gekennzeichnet, dass** mehrere Cluster der Trägerstrukturen (2) nebeneinander angeordnet sind, wobei ein seitlicher Abstand zwischen den direkt an das dreidimensionale Objekt (5) angrenzenden Verbreiterungsebenen (24) der Cluster kleiner als der Durchmesser eines Tropfens oder Stranges zur Herstellung des dreidimensionalen Objekts (5) ist.

5. Dreidimensionales Objekt (5) nach einem der vorhergehenden Ansprüche, **dadurch gekennzeichnet, dass** benachbarte Tropfen und/oder Stränge der Verbreiterungsebenen (24), die direkt an das dreidimensionale Objekt (5) angrenzen, unmittelbar zueinander benachbart sind.

6. Dreidimensionales Objekt (5) nach einem der vorhergehenden Ansprüche, **dadurch gekennzeichnet, dass** Ränder der übereinander angeordneten Verbreiterungsebenen (24) mit Rändern der Trägerebenen (22) einen Winkel bilden, der bis zum Selbststützwinkel des Materials der Stützgeometrie reicht und/oder wenigstens einen Winkel von 45° aufweist.

7. Dreidimensionales Objekt (5) nach einem der vorhergehenden Ansprüche, **dadurch gekennzeichnet, dass** auf der breitesten Verbreiterungsebene (24) wenigstens eine weitere zu dieser vorzugsweise identische Verstärkungsebene angeordnet ist.

8. Dreidimensionales Objekt (5) nach einem der Ansprüche 3 bis 7, **dadurch gekennzeichnet, dass** nebeneinander angeordnete Trägerstrukturen (2) und/oder Cluster von Trägerstrukturen (2) gitterförmig und/oder linienförmig angeordnet sind.

9. Dreidimensionales Objekt (5) nacheinem der Ansprüche 3 bis 8, **dadurch gekennzeichnet, dass** die Anzahl der Verbreiterungsebenen (24) benachbarter Trägerstrukturen (2) oder Cluster von Trägerstrukturen (2) mit einem Abstand zwischen den Trägerstrukturen (2) oder Clustern von Trägerstrukturen (2) korreliert.

10. Dreidimensionales Objekt (5) nach einem der vorhergehenden Ansprüche, **dadurch gekennzeichnet, dass** die Trägerstruktur (2) aus einer anderen plastifizierbaren und/oder verfestigbaren Masse hergestellt ist als das dreidimensionale Objekt (5).

11. Dreidimensionales Objekt (5) nach einem der vorhergehenden Ansprüche, **dadurch gekennzeichnet, dass** die Trägerstruktur (2) aus dem dreidimensionalen Objekt (5) herauslösbar ist, vorzugsweise flüssigkeitslöslich, insbesondere wasserlöslich.

12. Dreidimensionales Objekt (5) nach einem der vorhergehenden Ansprüche, **dadurch gekennzeichnet, dass** sich wenigstens eine Höhenebene, bis zu der/von der sich eine der Trägerstrukturen (2) erstreckt, von wenigstens einer anderen Höhenebene einer der anderen Trägerstrukturen (2) unterscheidet, bis zu der/von der sich diese erstreckt.

## Claims

1. A three-dimensional article (5) comprising a supporting geometry (1), wherein the three-dimensional article (5) is manufacturable from a plasticisable and/or solidifiable composition by a discharge of drops and/or strands of preferable identical diameters, comprising at least one planar cover structure (7) above at least one void (9), comprising at least one carrier structure (2) which extends from an article carrier (6) configured for manufacturing the three-dimensional article (5), or from a planar floor structure (8) of the three-dimensional article (5), through the at least one void (9) to the planar cover structure (7), wherein the supporting geometry (1) is made from the same or a different drop-shaped and/or strand-shaped plasticisable and/or solidifiable composition as the three-dimensional article (5),
wherein one or more carrier planes (22) of the carrier structure (2), which are applied on top of one another, respectively contain a number p ≥ 1 of drops and/or strands of the plasticisable and/or solidifiable composition, with identical diameters, wherein where p > 1 the drops and/or strands are arranged in a row next to one another, and wherein the drops and/or strands of the carrier planes (22) arranged next to one another are arranged at a spacing from one another that is smaller than a diameter of the drop or strand,
wherein the at least one carrier structure (2) widens toward the planar cover structure (7) and/or the planar floor structure (8) as a result of at least one widening plane (24) being applied to the respectively last carrier plane (22), wherein the number of widening planes (24) extending toward the cover structure (7) and the floor structure (8) may be different,
wherein if there are a plurality of widening planes (24) arranged above one another the widening planes (24) widen toward the planar cover structure (7) and/or the floor structure (8),
wherein, as they widen, the widening planes (24) contain a number q=n+p of drops and/or strands of the plasticisable and/or solidifiable composition that corresponds to the carrier planes (22), wherein the drops and/or strands are arranged in a row next to one another, and wherein n is the ordinal of the respective widening plane (24), and
wherein the drops and/or strands of the widening planes (24) arranged next to one another are arranged at a spacing from one another that is smaller than the diameter of the drop or strand,
wherein the drops and/or strands of the widening plane (24) that directly adjoin the three-dimensional article (5) are arranged at a spacing from one another that is smaller than the diameter of a drop or strand for manufacturing the three-dimensional article (5).

2. A three-dimensional article (5) according to Claim 1, **characterised in that** the drops and/or strands of the carrier plane (22) and/or widening plane (24) are arranged in a row next to one another in only one dimension.

3. A three-dimensional article (5) according to Claim 1 or 2, **characterised in that** a plurality of carrier structures (2) having identical or different numbers p, q of drops and/or strands of the carrier planes (22) and widening planes (24) are arranged next to one another in two dimensions to form a cluster, wherein a lateral spacing between the widening planes (24) of the carrier structures (2) that directly adjoin the three-dimensional article (5) is smaller than the diameter of a drop or strand for manufacturing the three-dimensional article (5).

4. A three-dimensional article (5) according to Claim 3, **characterised in that** a plurality of clusters of the carrier structures (2) are arranged next to one another, wherein a lateral spacing between the widening planes (24) of the clusters that directly adjoin the three-dimensional article (5) is smaller than the diameter of a drop or strand for manufacturing the three-dimensional article (5).

5. A three-dimensional article (5) according to one of the preceding claims,
**characterised in that** adjacent drops and/or strands of the widening planes (24) that directly adjoin the three-dimensional article (5) directly adjoin one another.

6. A three-dimensional article (5) according to one of the preceding claims,
**characterised in that** edges of the widening planes (24) that are arranged above one another form an angle with edges of the carrier planes (22), wherein this angle is at most the self-supporting angle of the material of the supporting geometry and/or is an angle of at least 45°.

7. A three-dimensional article (5) according to one of the preceding claims,
**characterised in that** arranged on the widest widening plane (24) is at least one further reinforcing plane that is preferably identical thereto.

8. A three-dimensional article (5) according to one of Claims 3 to 7,
**characterised in that** carrier structures (2) which are arranged next to one another and/or clusters of carrier structures (2) are arranged in the form of a lattice and/or line.

9. A three-dimensional article (5) according to one of Claims 3 to 8,
**characterised in that** the number of widening planes (24) of adjacent carrier structures (2) or clusters of carrier structures (2) correlates with a spacing between the carrier structures (2) or clusters of carrier structures (2).

10. A three-dimensional article (5) according to one of the preceding claims,
**characterised in that** the carrier structure (2) is made from a different plasticisable and/or solidifiable composition from the three-dimensional article (5).

11. A three-dimensional article (5) according to one of the preceding claims,
**characterised in that** the carrier structure (2) is releasable from the three-dimensional article (5), preferably by being liquid-soluble, in particular watersoluble.

12. A three-dimensional article (5) according to one of the preceding claims,
**characterised in that** at least one height plane to/from which one of the carrier structures (2) extends is different from at least one other height plane of one of the other carrier structures (2) to/from which this extends.

## Revendications

1. Objet tridimensionnel (5) à géométrie de support (1), cet objet tridimensionnel (5) pouvant être fabriqué à partir d'une masse plastifiable et/ou durcissable par application de gouttes et/ou de brins ayant de préférence des diamètres identiques, comportant une structure plane de couverture (7) au-dessus d'au moins un espace creux (9), présentant au moins une structure de support (2), qui s'étend depuis un support d'objet (6), conçu pour la fabrication de l'objet tridimensionnel (5) ou d'une structure plane de fond (8) de l'objet tridimensionnel (5) à travers le ou les espace(s) creux (9) jusqu'à la structure plane de couverture (7), la géométrie de support (1) étant fabriquée à partir de la même ou d'une autre masse sous forme de gouttes et/ou sous forme de brins plastifiable et/ou durcissable comme l'objet tridimensionnel (5),
un ou plusieurs plans de support (22), appliqués les uns au-dessus des autres, de la structure de support (2) contenant chacun une nombre de gouttes et/ou de brins p ≥ 1 de masse plastifiable et/ou durcissable avec des diamètres identiques, lorsque p >1, les gouttes ou brins étant disposé(e)s les un(e)s à côté des autres en une rangée et les gouttes et/ou brins des plans de support (22) disposés les un(e)s à côté des autres étant disposé(e)s à une distance les un(e)s des autres qui est inférieure au diamètre de la goutte et ou du brin,
la ou les structure(s) de support (2) se propageant vers la structure plane de couverture (7) et/ou vers la structure plane de fond (8) par application d'au moins un plan de diffusion (24) sur le dernier plan de support (22) respectif, le nombre de plans de diffusion (24) qui s'étendent vers la structure de couverture (7) et vers la structure de fond (8) pouvant être différent,
les plans de diffusion (24) se propageant vers la structure plane de couverture (7) et/ou la structure plane de fond (8) lorsque plusieurs plans de diffusion (24) sont disposés les uns au-dessus des autres, les plans de diffusion (24) se propageant contenant un nombre q = n + p de gouttes et/ou de brins de la masse plastifiable et/ou durcissable en correspondance avec les plans de support (22), les gouttes et/ou les brins étant disposé(e)s les un(e)s à côté des autres en une rangée et n étant le nombre d'ordre du plan de diffusion respectif (24), et
les gouttes et/ou brins des plans de diffusion (24) étant disposé(e)s les un(e)s à côté des autres avec une distance entre eux qui est inférieure au diamètre d'une goutte ou d'un brin,
les gouttes et/ou brins des plans de diffusion (24), qui se situent directement à proximité de l'objet tridimensionnel (5) étant disposé(e)s les uns par rapport aux autres avec une distance qui est inférieure au diamètre d'une goutte ou d'un brin pour la fabrication de l'objet tridimensionnel (5).

2. Objet tridimensionnel (5) selon la revendication 1, **caractérisé en ce que** les gouttes et/ou brins du plan de support (22) et/ou du plan de diffusion (24) sont disposé(e)s les un(e)s à côté des autres de manière exclusivement unidimensionnelle sur une rangée.

3. Objet tridimensionnel (5) selon la revendication 1 ou 2, **caractérisé en ce que** plusieurs structures de support (2) sont disposées avec des nombres p, q de gouttes et/ou brins des plans de support (22) et/ou des plans de diffusion (24) de manière bidimensionnelle les uns à côté des autres en un agrégat, une distance latérale entre les plans de diffusion (24) des structures de support (2) situés à proximité directe de l'objet tridimensionnel (5) étant inférieure au diamètre d'une goutte ou d'un brin pour la fabrication de l'objet tridimensionnel (5).

4. Objet tridimensionnel (5) selon la revendication 3, **caractérisé en ce que** plusieurs agrégats de structures de support (2) sont disposés les uns à côté des autres, la distance latérale entre les plans de diffusion (24) des agrégats situés juste à côté de l'objet tridimensionnel (5) étant inférieure au diamètre d'une goutte ou d'un brin pour la fabrication de l'objet tridimensionnel (5).

5. Objet tridimensionnel (5) selon l'une des revendications précédentes, **caractérisé en ce que** des gouttes et/ou brins voisin(e)s des plans de diffusion (24) qui sont juste à côté de l'objet tridimensionnel (5), sont directement voisins les uns des autres.

6. Objet tridimensionnel (5) selon l'une des revendications précédentes, caractérisé en que des bords de plans de diffusion (24) disposés les uns au-dessus des autres forment un angle avec des bords de plans de support (22), qui angle atteint l'angle d'auto-soutènement du matériau de la géométrie de support et/ou qui est d'au moins 45 degrés.

7. Objet tridimensionnel (5) selon l'une des revendications précédentes, **caractérisé en ce que** sur le plan de diffusion (24) le plus large est disposé au moins un autre plan de renforcement de préférence identique à lui.

8. Objet tridimensionnel (5) selon l'une des revendications 3 à 7, **caractérisé en ce que** les structures de support (2) et/ou les agrégats de structures de support (2) disposé(e)s les un(e)s à côté des autres sont disposé(e)s sous forme de grille et/ou sous forme de ligne.

9. Objet tridimensionnel (5) selon l'une des revendications 3 à 8, **caractérisé en ce que** le nombre de structures de support (2) ou de agrégats de structures de support (2) voisin(e)s des plans de diffusion (24) est corrélé avec une distance entre les structures de support (2) ou agrégats de structures de support (2).

10. Objet tridimensionnel (5) selon l'une des revendications précédentes, **caractérisé en ce que** la structure de support (2) est fabriquée à partir d'une masse plastifiée et/ou durcissable autre que celle de l'objet tridimensionnel (5).

11. Objet tridimensionnel (5) selon l'une des revendications précédentes, **caractérisé en ce que** la structure de support (2) est détachable de l'objet tridimensionnel (5) de préférence, soluble dans des liquides, en particulier soluble dans l'eau.

12. Objet tridimensionnel (5) selon l'une des revendications précédentes, **caractérisé en ce qu'**au moins un plan en hauteur, jusqu'auquel / à partir lequel l'une des structures de support (2) s'étend, se différencie d'au moins un autre plan en hauteur d'une des autres structures de support (2) jusqu'auquel / à partir duquel celle-ci s'étend.
